# EUROPÄISCHE PATENTSCHRIFT

(11) **EP 0 937 635 B1**
(45) Veröffentlichungstag und Bekanntmachung des Hinweises auf die Patenterteilung: **29.09.2004**
(21) Anmeldenummer: 99102736.8
(22) Anmeldetag: 19.02.1999
(51) Int. Cl.: B62J 1/00

(54) **Kugelförmiger Sattel**
Spherical saddle
Selle en forme de balle

(30) Priorität: 19.02.1998 DE 19806992
(43) Veröffentlichungstag der Anmeldung: 25.08.1999
(73) Patentinhaber: Hörger, Wilhelm, 82296 Schöngeising (DE)
(72) Erfinder: Hörger, Wilhelm, 82296 Schöngeising (DE)

(56) Entgegenhaltungen:
- CH-A- 264 172
- DE-A- 3 537 444

## Beschreibung

Die vorliegende Erfindung betrifft einen Sattel gemäß dem Oberbegriff von Anspruch 1. Sättel sind allgemein bekannt. Sie finden Anwendung bei Fahrrädern, bei sonstigen Zweioder Mehrrädern, bei motorisierten Fahrrädern, im Reitsport und weiteren Sitzvorrichtungen, (z.B. Karussell).
Diese Sättel haben den Nachteil, daß sie nicht zu einer ergonomischen Sitzposition führen.

Der Erfindung liegt die Aufgabe zugrunde, einen verbesserten Sattel zu schaffen, der die Nachteile der bekannten Sättel nicht aufweist.
Gelöst wird diese Aufgabe mit den Merkmalen des Anspruch 1.

Die Sitzvorteile von Bällen sind bereits durch Gymnastikbälle bekannt, und werden mittlerweile schon in Büros oder Schulen als Stuhlersatz verwendet. Sie dienen vorbeugend gegen Haltungsschäden und kräftigen die Muskulatur.
Weiterhin verleihen Bälle durch ihre Geometrie Aufsehen und Attraktivität.
Ferner sind runde Oberflächen durch ihre wasserabperlenden Eigenschaften sehr pflegeleicht.
Die mögliche Verwendung handelsüblicher Bälle gemäß Anspruch 2 hat den Vorteil, daß das Sitzteil individuell auswählbar und austauschbar ist.
Eine Ausgestaltung nach Anspruch 3 bietet eine zentrische Aufnahme des Sitzteils.
Durch den Einsatz eines vertikalen Ballrahmens (Anspruch 4) wird der Aufnahme des Sitzteils bessere Stabilität verliehen.
Anspruch 5 bietet die Möglichkeit, das Sitzteil in einer aus kunststoff- oder metallgegossenen Halterung aufzunehmen.
Ein Überzug nach Anspruch 6 bietet eine Schutzfunktion für Sitzteil und Halterung.
Anspruch 7 und Anspruch 8 bieten dem Sitzteil sicheren Halt gegen höhere Beanspruchungen.
Durch eine Ausgestaltung nach Anspruch 9 wird eine zusätzliche Federung erreicht.

Als Alternative zum Einsatz handelsüblicher Spiel- oder Sportbälle kommt die Verwendung von Bällen mit strukturierter Oberfläche in Frage. So können als Sitzteil handelsübliche Massagebälle oder Bälle mit Noppen verwendet werden (Anspruch 10). Noppenbälle bieten dem Fahrer weiteren Sitzkomfort.
Durch Einsatz eines Gelenks nach Anspruch 11 läßt sich das Sitzteil in verschiedenen Positionen verstellen. Eine Verzahnung in den Gelenkscheiben dient der besseren Kraftübertragung.

Zur besseren Veranschaulichung der Erfindung sind in den Figuren 1 - 4 Ausführungsbeispiele des erfindungsgemäßen Sattels dargestellt.
Selbstverständlich sind auch andere Ausgestaltungen im Rahmen der Ansprüche möglich.

Im einzelnen zeigen:
- Fig. 1:: Eine Ausgestaltung eines erfindungsgemäßen Sattels in Seitenansicht.
- Fig. 2:: Eine Draufsicht des in Fig. 1 gezeigten Sattels, ohne Sitzteil.
- Fig. 3:: Eine zweite.Ausgestaltung in Seitenansicht.
- Fig. 4:: Eine Draufsicht des in Fig.3 gezeigten Sattels.

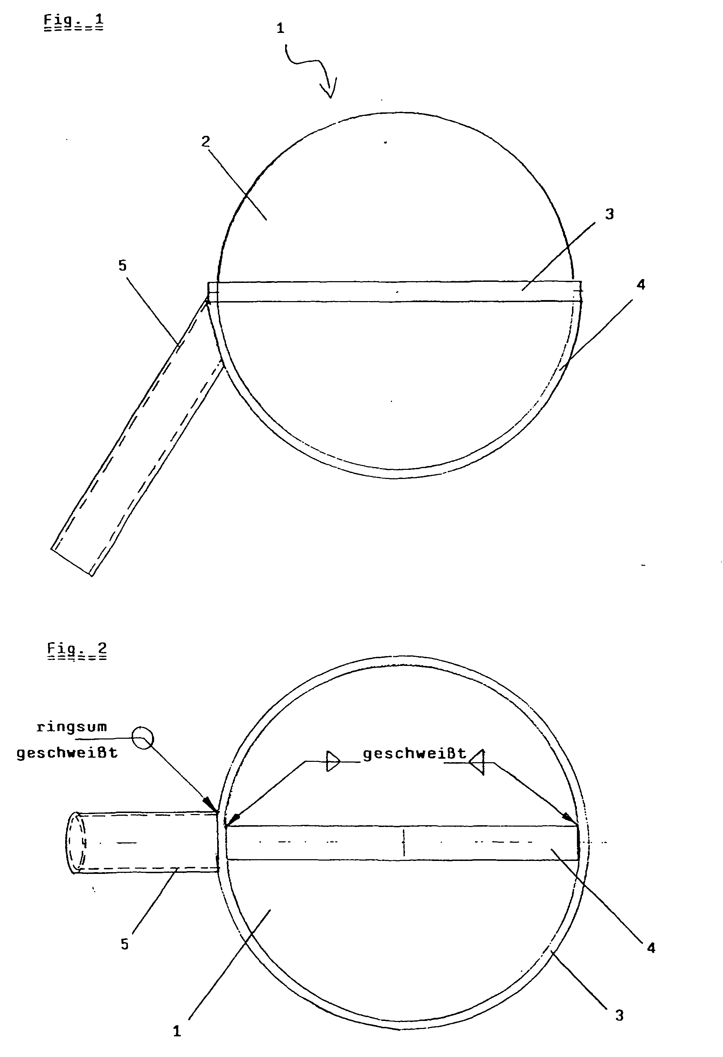

Eine erste Ausgestaltung ist in den Figuren 1 und 2 dargestellt. Dabei ist der Sattel mit **1** bezeichnet.
Bezugsziffer **2** zeigt das Sitzteil, in diesem Fall einen Ball.
Um diesen Ball in die richtige Position zu bringen, muß er in einer Halterung nach Nr. **3, 4, 5** aufgenommen werden.
Bezugsziffer **3** ist ein Ring, der aus Metall oder Kunststoff gefertigt ist.
Bezugsziffer **4** zeigt den vertikalen Ballrahmen, er besteht aus einem halbkreisförmigen Metall- oder Kunststoffring, der mit **3** fest verbunden ist.
Um den erfindungsgemäßen Sattel auf Fahrrädern zu montieren, wird das Befestigungsteil **5** eingesetzt. Es ist ein stabiles Rohr, welches mit den Teilen **3** und **4** fest verbunden (z.B. verschweißt) ist.

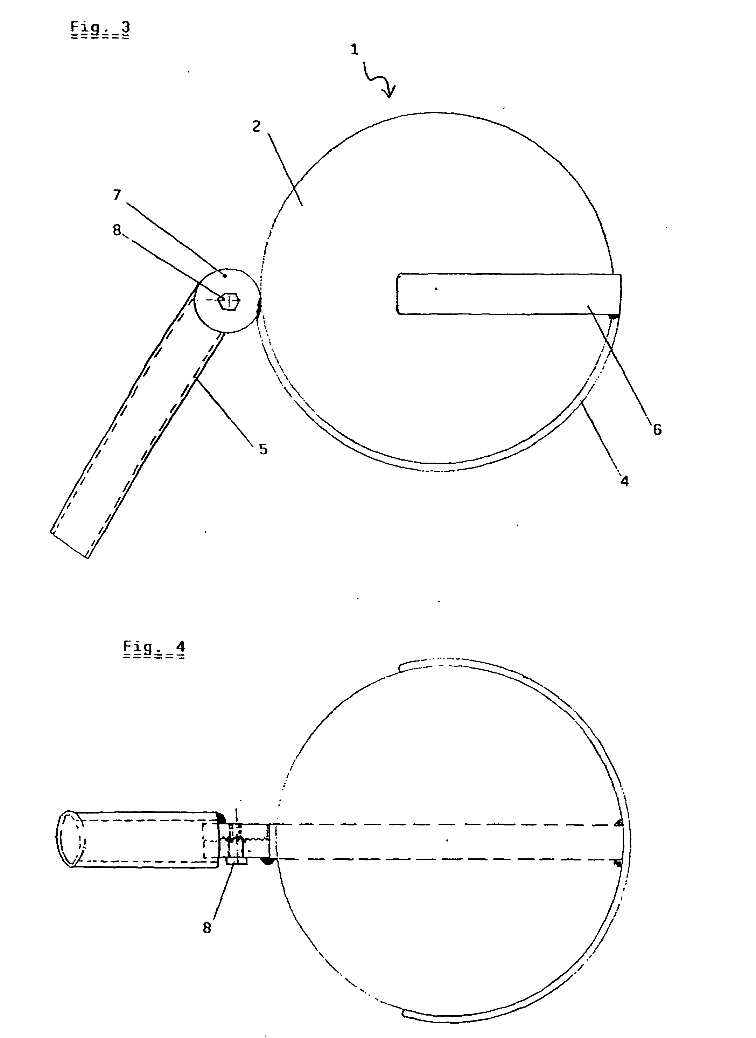

Eine zweite Ausgestaltung ist in den Figuren 3 und 4 dargestellt. Hier wird das Sitzteil in einem Ringsegment **6** gehalten und durch den vertikalen Ballrahmen **4** mit einem scheibenförmigen Gelenk **7** mit Feststellschraube **8** und somit mit dem Befestigungsteil **5** verbunden.

## Patentansprüche

1. Sattel (1) mit einem Befestigungsteil (5) und einem Sitzteil (2) **dadurch gekennzeichnet, daß** das Sitzteil (2) eine Kugel ist.

2. Sattel nach Anspruch 1, **dadurch gekennzeichnet, daß** die Kugel ein handelsüblicher Ball ist.

3. Sattel nach Anspruch 1, **dadurch gekennzeichnet, daß** die Kugel in einem Ring (3) gehalten ist.

4. Sattel nach Anspruch 3, **dadurch gekennzeichnet, daß** der Ring (3) durch einen vertikalen Ballrahmen (4) gestützt ist.

5. Sattel nach Anspruch 1, **dadurch gekennzeichnet, daß** die Kugel in einer geschlossenen Schale gehalten wird.

6. Sattel nach Anspruch 1, **dadurch gekennzeichnet, daß** der Ring (3), der Ballrahmen (4) und das Sitzteil mit einem festen oder abnehmbaren Schutzüberzug versehen sind.

7. Sattel nach Anspruch 4, **dadurch gekennzeichnet, daß** der Ring (3) und der Ballrahmen (4) so ausgebildet sind, daß der Ball durch Aufpumpen darin festklemmbar ist.

8. Sattel nach Anspruch 7, **dadurch gekennzeichnet, daß** der Ball eine ringsumlaufende Nut hat, die formschlüssig in den Ring (3) paßt.

9. Sattel nach Anspruch 4, **dadurch gekennzeichnet, daß** der Ring den Ball nicht völlig umschließt, sondern an der Seite des Befestigungsteiles offen ist. Dieses Ringsegment (6) ist an der gegenüberliegenden Seite durch den vertikalen Ballrahmen (4) mit dem Befestigungsteil (5) verbunden.

10. Sattel nach wenigstens einem der Ansprüche 1 - 6, **dadurch gekennzeichnet, daß** das Sitzteil ein handelsüblicher Massageball oder Ball mit Noppen ist.

11. Sattel nach Anspruch 4, **dadurch gekennzeichnet, daß** der Ring (3) oder der vertikale Ballrahmen (4) durch ein arretierbares Gelenk (7+8) mit dem Befestigungsteil (5) verbunden ist.

## Claims

1. Saddle (1) with a casing (5) and a seat (2). The seat is characteristically a sphere.

2. Saddle as described in Claim 1 **characterized by** the sphere being a common ball available in the shops.

3. Saddle as described in Claim 1, a specific feature being the ball held in a ring (3).

4. Saddle as described in Claim 3, a specific feature being the ring supported by a vertical ball frame (4).

5. Saddle as in Claim 1, **characterized by** the sphere being mounted in a closed casing.

6. Saddle as in Claim 1, a specific feature being that the ring (3), the ball frame (4) and the seat are protected by a permanent or removable coat or coating.

7. Saddle as in Claim 4, a specific feature being that the ring (3) and the ball frame (4) are constructed in such a way as to hold the ball as a result of it being pumped up.

8. Saddle as in Claim 7, **characterized by** the ball having a groove around its perimeter enabling a form closed fit in the ring (3).

9. Saddle as in Claim 4, a specific feature being that the ring (3) does not completely encircle the ball, but is open at the side of the attachment. The ring segment (6) is connected at the opposite side via the vertical ball frame to the casing (5).

10. Regarding at least one of the claims 1 to 6, the seat is **characterized by** the ball being a massage or nub ball that can be bought in the shops.

11. Saddle as in Claim 4, a specific feature being that the ring (3) or the vertical ball frame (4) are connected to the casing by a an adjustable joint (7+8).

## Revendications

1. Selle (1) avec une pièce de fixation (5) et une assise (2), **caractérisée en ce que** l'assise (2) est une sphère.

2. Selle selon la revendication 1, **caractérisée en ce que** la sphère est un ballon courant dans le commerce.

3. Selle selon la revendication 1, **caractérisée en ce que** la sphère est logée dans une bague (3).

4. Selle selon la revendication 3, **caractérisée en ce que** la bague (3) est supportée par un cadre de ballon (4).

5. Selle selon la revendication 1, **caractérisée en ce que** la sphère est maintenue dans une coquille fermée.

6. Selle selon la revendication 1, **caractérisée en ce que** la bague (3), le cadre de ballon (4) et l'assise sont munis d'un revêtement de protection fixe ou amovible.

7. Selle selon la revendication 4, **caractérisée en ce que** la bague (3) et le cadre de ballon (4) sont formés de façon à ce que le ballon puisse y être coincé par gonflage.

8. Selle selon la revendication 7, **caractérisée en ce que** le ballon possède une rainure circulaire entrant exactement dans la bague (3).

9. Selle selon la revendication 4, **caractérisée en ce que** la bague n'entoure pas entièrement le ballon mais qu'elle est ouverte du côté de la pièce de fixation. Sur le côté opposé, ce segment annulaire (6) est relié à la pièce de fixation (5) par le cadre de ballon vertical (4).

10. Selle selon au moins l'une des revendications 1 - 6, **caractérisée en ce que** l'assise est un ballon de massage ou un ballon à noppes courants dans le commerce.

11. Selle selon la revendication 4, **caractérisée en ce que** la bague (3) ou le cadre de ballon vertical (4) sont reliés à la pièce de fixation (5) par une articulation verrouillable (7+8).
